# EUROPÄISCHE PATENTSCHRIFT

(11) **EP 0 778 459 B1**
(45) Veröffentlichungstag und Bekanntmachung des Hinweises auf die Patenterteilung: **10.04.2002**
(21) Anmeldenummer: 96117015.6
(22) Anmeldetag: 23.10.1996
(51) Int. Cl.: G01J 3/28

(54) **Spektrometervorrichtung**
Spectrometer device
Appareil de spectrométrie

(30) Priorität: 04.12.1995 DE 19545178
(43) Veröffentlichungstag der Anmeldung: 11.06.1997
(73) Patentinhaber: Perkin Elmer Bodenseewerk Zweigniederlassung der Berthold GmbH & Co. KG, 88662 Überlingen (DE)
(72) Erfinder: Radziuk, Bernhard, Dr., 88699 Frickingen (DE)
(74) Vertreter: Grünecker, Kinkeldey, Stockmair & Schwanhäusser Anwaltssozietät

(56) Entgegenhaltungen:
- EP-A- 0 463 600
- WO-A-92/21948
- DE-A- 3 631 032
- US-A- 4 692 883
- APPLIED SPECTROSCOPY, Bd. 47, Nr. 11, 1.November 1993, Seiten 1808-1813, XP000409336 TSENG C -H ET AL: "WAVELENGTH CALIBRATION OF A MULTICHANNEL SPECTROMETER"

## Beschreibung

Die Erfindung betrifft eine Spektrometervorrichtung gemäß der Präambel des Anspruchs 1.

Eine solche Spektrometervorrichtung wird in der Veröffentlichung WAVELENGTH CALIBRATION OF A MULTICHANNEL SPECTROMETER von Ching-Hui Tseng et. al., erschienen in APPLIED SPECTROSCOPY, Bd. 47 (1993), Nr. 11 (1. November 1993), beschrieben.

Es sind Spektrometervorrichtungen bekannt, deren Monochromatoreinrichtung durch Lageverstellung wenigstens eines darin enthaltenen dispergierenden Elements auf den Durchlaß unterschiedlicher Wellenlängen oder Wellenlängenbereiche einstellbar ist. Indem mit der gewöhnlich durch einen Sekundärelektronenvervielfacher gebildeten Lichtmeßeinrichtung Lichtmeßwerte für verschiedene Einstellwerte ermittelt werden, lassen sich für eine zu untersuchende Probenlichtquelle Lichtintensitätswerte in Abhängigkeit von der Wellenlänge des ausgesendeten Lichts und damit Spektren der Probenlichtquelle ermitteln.

Mit Hilfe der ein bekanntes Spektrum aufweisenden Kalibrierlichtquelle kann überprüft werden, ob ein an der Monochromatoreinrichtung eingestellter Wellenlängenwert dem tatsächlich vorhandenen Wert der durchgelassenen Wellenlänge entspricht. Dazu wird ausgehend vom Einstellwert die Lichtintensität in Abhängigkeit von einer Verstellung der Monochromatoreinrichtung ermittelt, und die Einstellskala der Monochromatoreinrichtung entsprechend einem ermittelten Maximalwert justiert.

Es ist die Aufgabe der vorliegenden Erfindung, eine neue Spektrometervorrichtung der eingangs erwähnten Art zu schaffen, deren Kalibrierung gegenüber dem beschriebenen Stand der Technik verbessert ist.

Diese Aufgabe wird durch die Spektrometervorrichtung mit den Merkmalen von Anspruch 1 gelöst.

Durch diese erfindungsgemäße Lösung ergibt sich eine wesentliche Vereinfachung der Kalibrierung der Spektrometervorrichtung dadurch, daß zur Kalibrierung keinerlei mechanische Verstellung der Monochromatoreinrichtung erforderlich ist und die Korrektur von insbesondere durch Wärmeeinflüsse bewirkten Verstellungen der Monochromatoreinrichtung allein auf elektronischem Wege über eine mit den Lichtmeßelementen verbundene, insbesondere durch eine programmgesteuerte Datenverarbeitungseinrichtung implementierbare Kalibrierschaltung erfolgen kann. Darüber hinaus kann die Kalibierung mit höherer Genauigkeit und simultan zur Spektraluntersuchung einer Probe durchgeführt werden.

Bei Verwendung einer großen Anzahl von Lichtmeßelementen in den jeweiligen Spalten können entlang einem Monochromatoreintrittsspalt angeordnete unterschiedliche Raumbereiche einer Probenlichtquelle untersucht werden, und es ist zum Beispiel möglich, im Rahmen einer spekrometrischen Untersuchung der Probenlichtquelle nur den Meßwert eines solchen Lichtmeßelements einer Matrixspalte für die spektrale Untersuchung auszuwerten, für den sich ein besonders hohes Signal-Rausch-Verhältnis ergibt.

Dadurch, daß Licht von der Probenlichtquelle und Licht von der Kalibrierlichtquelle voneinander getrennt auf Lichtmeßelemente verschiedener Lichtmeßelementzeilen fällt, können die Kalibrierung und eine spektrale Messung in zeitlicher Überlappung durchgeführt werden, indem zum Beispiel eine die Kalibriereinrichtung bildende Datenverarbeitungseinrichtung mit einem Verarbeitungsprogramm derart versehen ist, daß während der Zuordnung von Wellenlängen zu Lichtmeßelementen bereits die Erfassung von durch eine zu untersuchende Probenlichtquelle erzeugten Lichtmeßwerten erfolgt.

In einer besonders bevorzugten Ausführungsform der Erfindung ist die Monochromatoreinrichtung als Doppelmonochromator mit einem ersten, eine Wellenlängenvorauswahl treffenden und einem zweiten, das vorausgewählte Licht noch weiter aufspaltenden Monochromator ausgebildet, wobei vorzugsweise der erste Monochromator ein Prismenmonochromator und der zweite ein Echelle-Monochromator ist. Insbesondere durch die Verwendung einer Kombination aus Prismen- und Echelle-Monochromator läßt sich bei hohem Lichtdurchsatz eine hohe Dispersion und damit hohe Auflösung der Monochromatoreinrichtung erreichen, und die Monochromatoren können in einer auf unterschiedliche Wellenlängenbereiche einstellbaren Monochromatoreinrichtung insbesondere derart vorgesehen sein, daß bei geeigneter Länge der Lichtmeßeinrichtung in Dispersionsrichtung bei jedem Einstellwert der Monochromatoreinrichtung aus dem zweiten Monochromator nur Licht etwa einer einzigen Beugungsordnung auf die Lichtmeßeinrichtung fällt.

Entsprechend einer weiteren besonders bevorzugten Ausgestaltung der Erfindung ist vorgesehen, Kalibrierlicht der Kalibrierlichtquelle in einen zwischen dem ersten und zweiten Monochromator eingefügten Zwischenspalt einzuleiten. Indem in bezug auf das Licht der Kalibrierlichtquelle durch diese Einleitung in den Zwischenspalt keine Wellenlängenvorauswahl getroffen wird, läßt sich bei Auswahl einer Kalibrierlichtquelle mit geeignetem Spektrum erreichen, daß für jeden Einstellwert der Monochromatoreinrichtung ein durch die Kalibrierlichtquelle erzeugtes Beleuchtungsmuster auf der Lichtmeßeinrichtung abgebildet wird, so daß anhand eines solchen definierten Beleuchtungsmusters in jeder Einstellposition der Monochromatoreinrichtung eine Kalibrierung vorgenommen werden kann. Die Erzeugung eines solchen Beleuchtungsmusters für jeden Einstellwert der Monochromatoreinrichtung ist dadurch möglich, weil durch die fehlende Wellenlängenvorauswahl bei Einspeisung von Kalibrierlicht in den Zwischenspalt Beugungslicht verschiedener Beugungsordnungen zur Abbildung auf die Lichtmeßeinrichtung benutzt werden kann.

Vorzugsweise ist die Lichtmeßeinrichtung durch ein CCD-Feld mit einer Matrixanordnung von Pixeln gebildet. In einer bevorzugten Ausführungsform sind zwei getrennte Pixelfelder mit länglichen Pixeln vorgesehen, die sich mit ihren Längsseiten senkrecht zu der Richtung, in der das aus der Monochromatoreinrichtung austretende Licht dispergiert ist, erstrecken. In der zweigeteilten Matrixanordnung empfängt ein Feld Licht einer zu untersuchenden Probenlichtquelle, während auf das andere Feld Licht aus der Kalibrierlichtquelle trifft. Längliche Pixel können zum Beispiel in den Abmessungen 50 µm x 12 µm verwendet werden.

In einer bevorzugten Ausführungsform beträgt die Länge, in der sich die Lichtmeßelementmatrixzeilen in der Dispersionsrichtung erstrecken etwa 3 mm, wobei innerhalb dieser Länge etwa 200 bis 300 Lichtmeßelementspalten angeordnet sind. Die Abmessungen der Lichtmeßeinrichtung sind vor allem durch Form und Abmessungen der Brennfläche einer den Monochromatorausgangsstrahl auf die Lichtmeßeinrichtung fokussierenden Abbildungsoptik begrenzt.

Wie bereits erwähnt wurde, läßt sich die Kalibriereinrichtung zweckmäßig durch eine Lichtmeßwerte der Lichtmeßeinrichtung zur Zuordnung von Wellenlängen und Lichtmeßelementen verarbeitende, programmgesteuerte Datenverarbeitungseinrichtung bilden, wobei die Datenverarbeitungseinrichtung mit einem Mustererkennungsprogramm zum Auswerten von zum Erkennen von Spektralabbildungsmustern der Kalibrierlichtquelle für jede Einstellposition der Monochromatoreinrichtung versehen sein kann. Insbesondere kann das Erkennungsprogramm zum Auswerten von Relativpositionen von Linien des Kalibrierspektrums zur Erkennung von bestimmten Wellenlängen entsprechenden Spektrallinien vorgesehen sein. Ein Erkennungsprogramm kann letztlich darauf basieren, daß für jeden Einstellwert der Monochromatoreinrichtung ein sich für diesen Einstellwert ergebendes Spektralabbildungsmuster der Kalibrierlichtquelle und eine Relativposition einer dem Wellenlängeneinstellwert entsprechenden Spektrallinie in bezug auf das Spektralabbildungsmuster gespeichert ist.

Vorteilhaft können in der Datenverarbeitungseinrichtung ferner für wenigstens einen Teil der Lichtmeßelemente individuelle Intensitätsmeßwertkorrekturfaktoren oder individuelle Kalibrierfaktoren gespeichert sein. Dadurch ist es möglich, fertigungsbedingte Empfindlichkeitsschwankungen von Pixeln auszugleichen und dadurch die Meßgenauigkeit der Spektralmessung weiter zu erhöhen.

Die Datenverarbeitungseinrichtung kann darüber hinaus mit einem Verarbeitungsprogramm versehen sein, das zeitsparend während der Zuordnung von Wellenlängen zu Lichtmeßelementen die Erfassung von durch eine zu untersuchende Probenlichtquelle erzeugten Lichtmeßwerten steuert. Insbesondere kann dieses Verarbeitungsprogramm anhand einer Vorabbestimmung von Lichtmeßwerten für die Probenlichtquelle die Meßzeit für die eigentliche Spektrenmessung an der Probenlichtquelle festlegen und damit vorteilhaft den dynamischen Meßbereich der Pixel erweitern, indem bei steigender Lichtintensität der Probenlichtquelle die Meßzeit entsprechend verkürzt und damit ein Betreiben der Pixel im Sättigungsbereich vermieden wird.

Die Erfindung soll nun anhand eines Ausführungsbeispiels und der beiliegenden, sich auf dieses Ausführungsbeispiel beziehenden Zeichnungen näher erläutert und beschrieben werden.
Es zeigen:
- Fig. 1: eine schematische Darstellung einer Spektrometervorrichtung gemäß der vorliegenden Erfindung,
- Fig. 2: eine schematische Darstellung einer in dem Ausführungsbeispiel von Fig. 1 verwendeten Monochromatoreinrichtung und eine aus der Monochromatoreinrichtung Licht empfangende Lichtmeßeinrichtung,
- Fig. 3: einen bei dem Monochromator gemäß Fig. 1 und 2 verwendeten Monochromatorzwischenspalt für den Eintritt von Licht einer Kalibrierlichtquelle,
- Fig. 4: einen in der Spektrometervorrichtung gemäß Fig. 1 und Fig. 2 verwendete Lichtmeßeinrichtung in ihrer räumlichen Beziehung zu auf die Lichtmeßeinrichtung abbildbaren Spektrallinien einer Probenlichtquelle und einer Kalibrierlichtquelle, und
- Fig. 5: die Lichtmeßeinrichtung von Fig. 4 in einer detaillierteren Darstellung.

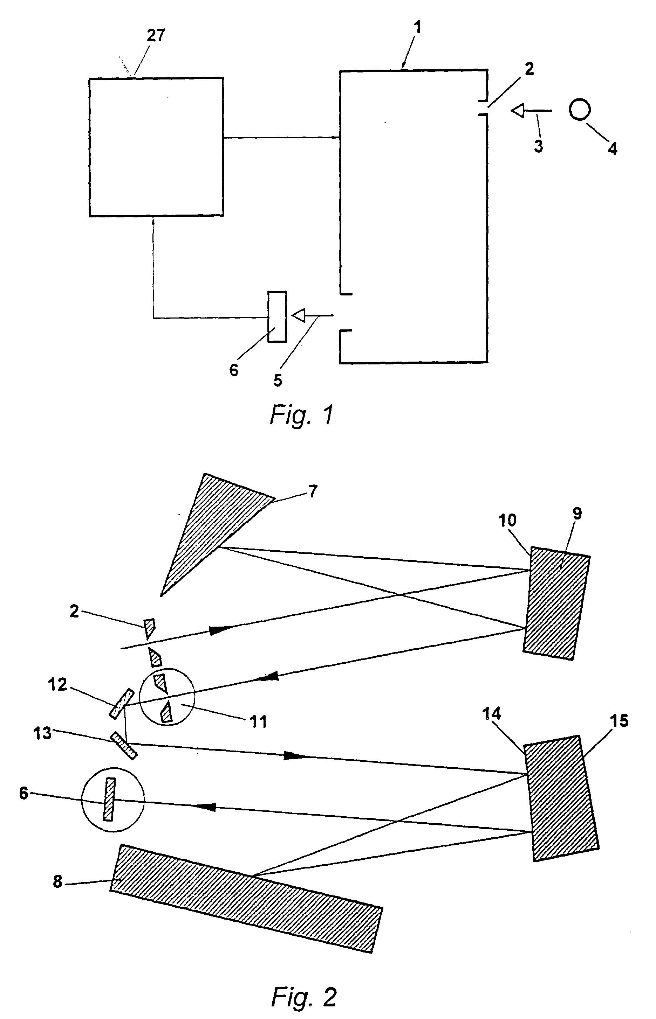

In der Fig. 1 ist mit dem Bezugszeichen 1 eine Monochromatoreinrichtung mit einem Lichteintrittsspalt 2 für den Eintritt von Licht entsprechend dem Pfeil 3, das von einer zu untersuchenden Probenlichtquelle 4 ausgesandt wird, bezeichnet.

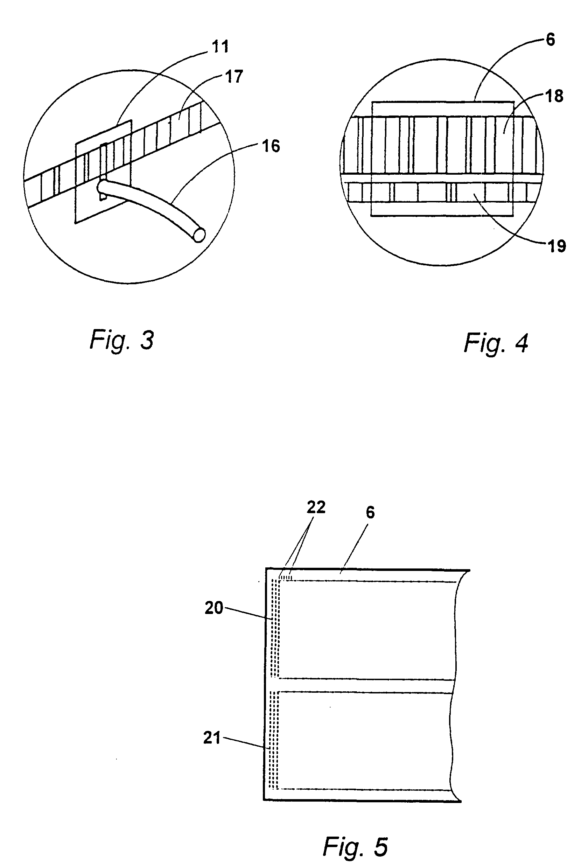

Mit dem Bezugszeichen 6 ist in der Fig. 1 eine nachfolgend anhand der Fig. 4 und 5 genauer beschriebene Lichtmeßeinrichtung bezeichnet, welche entsprechend dem Pfeil 5 Austrittslicht aus der Monochromatoreinrichtung 1 empfängt. Entsprechend der Funktion der Monochromatoreinrichtung enthält das Austrittslicht nur Lichtwellenlängen eines eng begrenzten Wellenlängenbereichs des Lichts der Probenlichtquelle 4.

Die Lichtmeßeinrichtung 6 ist mit einer Steuer-und- Auswerteinrichtung 27 verbunden, die ihrerseits zur Einstellung der Monochromatoreinrichtung auf eine bestimmte durchzulassende Wellenlänge mit der Monochromatoreinrichtung 1 verbunden ist. Eine weitere wesentliche Funktion der in dem vorliegenden Ausführungsbeispiel durch einen Computer gebildeten Steuer-und-Auswerteinrichtung 27 besteht in der Verarbeitung von Lichtmeßwerten, die ihr von der Lichtmeßeinrichtung 6 zugeführt werden. Zur Ermittlung von Spektren ordnet die Einrichtung 27 gemessenen Lichtintensitäten die Wellenlänge des Lichts zu, dessen Intensität gemessen worden ist.

Wie aus der Fig. 2 hervorgeht, ist die Monochromatoreinrichtung 1 als Doppelmonochromator mit einem Prismenmonochromator 7 und einem Echelle-Monochromator 8 ausgebildet. Mit 9 ist in der Fig. 2 ein Spiegel mit einer abbildenden, gekrümmten Spiegelfläche 10 bezeichnet, durch welchen der Eintrittsspalt 2 auf einen Zwischenspalt 11 abgebildet wird, wobei entsprechend der Lage des Prismenmonochromators 7 das Abbildungslicht gegenüber dem durch den Eintrittsspalt 2 eintretenden Licht nur noch einen verhältnismäßig eng begrenzten Wellenlängenbereich enthält.

Mit 12 und 13 sind in der Fig. 2 Umlenkspiegel bezeichnet, über die Licht vom Zwischenspalt 11 auf eine gekrümmte, abbildende Spiegelfläche 14 eines weiteren Spiegels 15 gelangt. Die Spiegelfläche 14 bildet den Zwischenspalt 11 auf die Lichtmeßeinrichtung 6 ab. Vom Zwischenspalt 11 auf die Spiegelfläche 14 gelangendes Licht wird zunächst zu dem Gitter des Echelle-Monochromator 8 reflektiert, von wo es unter weiterer Aufspaltung bezüglich seiner Wellenlänge zu der Spiegelfläche 14 zurückgelangt und dort unter Abbildung des Zwischenspalts 11 zu der Lichtmeßeinrichtung 6 reflektiert wird. Durch die Einrichtung 27 steuerbare Einrichtungen zur Lageverstellung des Prismenmonochromators und des Echelle-Monochromators 8, um die Monochromatoreinrichtung 1 auf einen bestimmten Bereich durchzulassender Wellenlänge einzustellen, sind in den Fig. 1 und 2 nicht gezeigt.

Wie aus der den Zwischenspalt 11 gesondert darstellenden Fig. 3 hervorgeht, besteht an diesem Zwischenspalt die Möglichkeit, Licht von einer nicht gezeigten Kalibrierlichtquelle über eine Faserlichtleitung 16 in den Zwischenspalt 11 einzuspeisen. Mit 17 sind durch den Prismenmonochromator 7 erzeugte Spektrallinien bezeichnet, die in Längsrichtung des Spalts gesehen in einem Spaltbereich gelegen sind, der von dem Spaltbereich entfernt ist, in den über die Lichtfaserleitung 16 Licht von einer Kalibrierlichtquelle in den Spalt 11 eingespeist wird.

In der die Lichtmeßeinrichtung 6 gesondert zeigenden Fig. 4 ist mit 18 ein Linienspektrum bezeichnet, das von einer zu untersuchenden Probenlichtquelle herrührt und durch eine Vordispersion am Prismenmonochromator 7 und eine weitere Dispersion am Echelle-Monochromator 8 gebildet ist. Das Linienspektrum 18 ist, soweit es sich über die Länge der Lichtmeßeinrichtung 6 erstreckt, auf die Lichtmeßeinrichtung 6 abgebildet.

Getrennt von dem Linienspektrum 18 erscheint auf der Lichtmeßeinrichtung 6 ein weiteres Linienspektrum 19, das durch das am Zwischenspalt 11 eingespeiste Licht der Kalibrierlichtquelle gebildet ist.

Wie aus der Fig. 5 hervorgeht, weist die Lichtmeßeinrichtung 6 zwei voneinander getrennte CCD-Pixelfelder 20 und 21 mit einzeln adressierbaren Pixeln auf. Die einzelnen Pixel in den Abmessungen 50 µm x 12 µm bilden Zeilen von jeweils 256 Pixeln, wobei in Richtung der Zeilen die Länge der Pixelfelder ca. 3,00 mm beträgt. Insgesamt bilden die Pixel beider Felder eine Matrixanordnung mit 256 x 100 Pixeln. Die beiden Pixelfelder 20 und 21 sind derart weit genug voneinander getrennt angeordnet, daß kein Licht einer zu untersuchenden Lichtquelle auf das Pixelfeld 21 und kein Licht von der Kalibrierlichtquelle auf das Pixelfeld 20 fallen kann. Die Matrixzeilen der Pixelanordnung erstrecken sich in der Richtung, in die das auf die Lichtmeßeinrichtung auftreffende Licht durch die Monochromatoreinrichtung dispergiert wird. Die Länge der Matrixzeilen ist so gewählt, daß in jeder Monochromatoreinstellposition die Abbildung eines zur Kalibrierung verwendbaren Spektrallichtmusters der Kalibrierlichtquelle auf das Pixelfeld 20 gesichert ist. In den Matrixspalten sind die Pixel mit ihrer Längsseite entlang einer zu der Dispersionsrichtung senkrechten Linie ausgerichtet.

Die einen Computer umfassende Steuer-und-Auswerteinrichtung 27 weist Einrichtungen zur Verstärkung und Digitalisierung der Pixelsignale sowie Steuerfunktionen auf, durch die die Meßzeit, innerhalb welcher die Pixel einen von der Lichtintensität abhängigen Ladungsbetrag erzeugen können, festgelegt wird. Der in der Einrichtung 27 enthaltene Computer ist mit Spektrenmustererkennungsprogrammen versehen, durch welche die Wellenlängen von durch die Kalibrierlichtquelle erzeugten Spektrallinien erkannt und denjenigen Matrixspalten zugeordnet werden können, auf die diese Linien fallen. Ausgehend von den diesen Matrixspalten zugeordneten Wellenlängen können diese Programme durch Interpolation oder/und unter Berücksichtigung der durch die Monochromatoreinrichtung bewirkten Dispersion auch solchen Matrixspalten einen Wellenlängenwert zuordnen, auf die keine durch die Kalibrierlichtquelle erzeugte Spektrallinie fällt.

Im folgenden wird die Funktion der in den Fig. 1 bis 5 dargestellten Spektrometervorrichtung beschrieben.

Zur Bestimmung des Spektrums des Probenlichtquelle wird die Probenlichtquelle 4 vor dem Eintrittsspalt 2 der Monochromatoreinrichtung 1 angeordnet und die Monochromatoreinrichtung 1 auf einen ersten Wellenlängenwert bzw. Wellenlängenbereich eingestellt. Gleichzeitig mit der Einspeisung von Probenlicht in den Eintrittsspalt 2 erfolgt die Einspeisung von Licht einer Kalibrierlichtquelle über die Lichtfaserleitung 16 in den Zwischenspalt 11. Damit werden, wie in Fig. 4 gezeigt ist, auf die Lichtmeßeinrichtung 6 das von der Probenlichtquelle erzeugte Linienspektrum 18 und das von der Kalibrierlichtquelle erzeugte Linienspektrum 19 im Pixelfeld 20 bzw. 21 der Lichtmeßeinrichtung 6 getrennt voneinander abgebildet. Über die Pixel des Feldes 21 erfolgt zunächst eine Lichtmessung, wobei diejenigen Pixel des Feldes 21 ein Signal liefern, auf die eine Spektrallinie des durch die Kalibrierlichtquelle erzeugten Linienspektrums fällt. Über ein Erkennungsprogramm, das den am Monochromator voreingestellten Wellenlängenwert bzw. Wellenlängenbereich und das bekannte Spektrum der Kalibrierlichtquelle bzw. das dem voreingestellten Wellenlängenwert entsprechende Spektrallinienmuster auf der Lichtmeßeinrichtung berücksichtigt, werden zunächst die Spektrallinien des abgebildeten Spektrums 19 der Kalibrierlichtquelle identifiziert und denjenigen Matrixspalten, in der die diese Linien empfangenden Pixel liegen, der diesen entsprechende Wellenlängenwert zugeordnet. Matrixspalten, auf deren Pixel keine Spektrallinie fällt, kann durch das Programm ausgehend von den bestimmten Pixeln bereits zugeordneten Wellenlängen durch Interpolation unter Berücksichtigung der Lage der einzelnen Pixel in der Pixelzeile oder/und unter Berücksichtigung der durch die Monochromatoreinrichtung bewirken Dispersion ebenfalls ein Wellenlängenwert zugeordnet werden. Damit ist die gesamte Lichtmeßeinrichtung kalibriert und auf das Pixelfeld 20 fallenden Spektrallinien der zu untersuchenden Probenlichtquelle kann zur Bestimmung des Spektrums der Probenlichtquelle ein Wellenlängenwert zugeordnet werden.

Zur Messung des gesamten Spektrums der Probenlichtquelle erfolgt unter Abtastung der Probenlichtquelle eine fortlaufende Verstellung der Monochromatoreinrichtung, wobei für jede Einstellung erneut eine simultane Kalibrierung vorgenommen werden kann.

Indem das Licht der Kalibrierlichtquelle nicht in den Eintrittsspalt 2 der Monochromatoreinrichtung 1, sondern in deren Zwischenspalt 11 eingespeist wird, unterliegt das Licht der Kalibrierlichtquelle keiner Voraufspaltung, und es ist bei Auswahl einer Kalibrierlichtquelle mit geeignetem Spektrum möglich, für jede mögliche Einstellung der Monochromatoreinrichtung auf dem Feld 21 eine definierte Spektrallichtverteilung der Kalibrierlichtquelle abzubilden, welche Licht verschiedener Beugungsordnungen des Echelle-Monochromators enthält.

Das für die Justierung der Lichtmeßeinrichtung und die Auswertung der Lichtmeßwerte der Probenlichtquelle verwendete Verarbeitungsprogramm kann derart gestaltet sein, daß die Bestimmung der Lichtmeßwerte für die Probenlichtquelle bereits erfolgt, während noch die Kalibrierung der Lichtmeßeinrichtung im Gange ist. Auf diese Weise kann die insgesamt erforderliche Meßzeit verkürzt werden. Eine weitere Ausgestaltungsmöglichkeit des Verarbeitungsprogramms kann darin bestehen, daß für die Probenlichtquelle eine Vorabmessung mit kurzer Belichtungszeit durchgeführt wird, um anhand des Ergebnisses dieser Vorabmessung die Belichtungszeit für die eigentliche Messung festzulegen, die mit ansteigender Intensität entsprechend kürzer gewählt wird, um nicht in den Sättigungsbereich der CCD-Pixel zu gelangen.

Zur weiteren Verringerung der Meßzeit kann das Verarbeitungsprogramm Vorinformationen berücksichtigen, um die Auswertung nur mit solchen Pixeln durchzuführen, auf die überhaupt für eine Analyse bedeutsames Spektrallicht fällt.

Zur Erhöhung der Meßgenauigkeit können im Computer der Einrichtung 27 für jedes einzelne Pixel Lichtintensitätskorrekturwerte gespeichert sein, um fertigungsbedingte Empfindlichkeitsunterschiede zwischen den einzelnen Pixeln auszugleichen.

Eine zu untersuchende Probenlichtquelle (oder Kalibrierlichtquelle) emittiert ihr Licht typischerweise nicht gleichmäßig. Daher treten in Abhängigkeit von der Betrachtungsrichtung über die Länge des Monochromatoreintrittsspalts unterschiedliche Verteilungen der Intensität des zu untersuchenden Lichts der Quelle auf, wobei sich auch das Signal-Rausch-Verhältnis in Spaltrichtung verändern kann.

Mit Hilfe der zweidimensionalen Lichtmeßeinrichtung und einem entsprechenden Verarbeitungsprogramm kann durch Auswahl von Pixelgruppen oder einzelner Pixel jeder gewünschte Abschnitt der Intensitätsverteilung getrennt untersucht werden, wobei z.B. ein Bereich mit maximalem Signal-Rausch-Verhältnis auswählbar ist. Ferner können die in einer Intensitätsverteilung auftretenden Intensitätsunterschiede in Vorabmessungen ausgewertet werden, um eine optimale Betrachtungsposition einer Probenlichtquelle mit z.B. möglichst geringen Intensitätsunterschieden entlang der Spaltlänge herauszufinden.

Die Intensitäten der auf dem zweidimensionalen Detektor abgebildeten Spektrallichtmuster können sich stark ändern, so daß die über eine gegebene Meßzeit zu integrierende Ladung die begrenzte Pixelkapazität wesentlich übersteigt. Neben einer entsprechenden Anpassung der Meßzeit kann auch der Betrachtungsbereich der zu untersuchenden Proben flexibel ausgewählt werden, wobei für jede Probe eine optimale Kombination im Rahmen einer schnellen Vorabmessung unter Verwendung von nur beim Maximum des Intensitätsprofils angeordneten Pixeln bestimmt werden kann. Diese Vorabmessung ist kombinierbar mit der Wellenlängenkalibrierung, und ihr kann wahlweise eine Korrektur der Monochromatoreinstellposition folgen. Bei sehr starken Lichtintensitäten können unter Erhöhung der Kapazität mehrere Pixel in vertikaler Richtung zusammengefaßt werden, und im Extremfall wird nur ein gebildetes einziges Pixel ausgewertet. Darüber hinaus kann die Position dieses Pixels zur Herabsetzung der Intensität abseits vom Intensitätsmaximum gewählt werden. Insbesondere bei schnellen Übersichtsmessungen kann durch flexible Auswertung von Pixeln entsprechend unterschiedlichen räumlichen Bereichen der zu untersuchenden Lichtquelle für einen dynamischen Meßbereich derart gesorgt werden, daß die Notwendigkeit für Vorabmessungen beseitigt ist, was den Probendurchsatz erhöht.

Bei genügend langen Proben kann ein Meßlichtmengengewinn durch Verlängerung des abgebildeten Spaltbildes erzielt werden, wobei allerdings eine merkliche, die Auflösung vermindernde Krümmung des Spaltbildes auftreten kann. Der zweidimensionale Detektor bietet die Möglichkeit, diese Krümmung zu korrigieren, indem Pixel von aneinandergrenzenden Spalten dem gekrümmten Spaltbild folgend ausgewertet werden. Durch eine solche Korrektur läßt sich bei großer Meßlichtmenge eine hohe Auflösung beibehalten.

Die durch den zweidimensionalen Detektor verfügbare Information kann auch für die genaue Ausrichtung des Spektrometers hilfreich sein. Mit wachsender Spalthöhe wird es nämlich immer wichtiger, daß die Lichteintrittsspalte zu einander parallel ausgerichtet sind. Abweichungen von der Parallelität führen zu Spaltbilderweiterungen und damit zu einer Verminderung der Auflösung. Auch hier kann durch entsprechende Auswertung der Pixelsignale benachbarter Pixelspalten eine gegenseitige Verdrehung der Eintrittsspalte erkannt und korrigiert werden.

Über die Emissionsspektrometrie hinaus ist die beschriebene Vorrichtung vor allem auch auf dem Gebiet der Atomabsorptionspektrometrie anwendbar. Insbesondere bei der Untersuchung von Kontinuum-Quellen kann die hohe Auflösung und genaue Kalibrierung vorteilhaft bei der Eliminierung und Korrektur spektraler Interferenzen vorzugsweise unter Verwendung mathematischer Methoden genutzt werden, wobei die zweidimensionale Information des Detektors in analoger Weise wie bei der Untersuchung von Linienspektren emittierenden Quellen auswertbar ist.

## Patentansprüche

1. Spektrometervorrichtung mit
einer Monochromatoreinrichtung (1),
einer Lichtmeßeinrichtung (6), die Spektrallicht von der Monochromatoreinrichtung empfängt, und
einer Kalibriereinrichtung, die eine Kalibrierlichtquelle aufweist,
wobei die Lichtmeßeinrichtung (6) eine Matrixanordnung (20, 21) von Lichtmeßelementen (22) mit Lichtmeßelementzeilen, die sich in Dispersionsrichtung der Monochromatoranordnung erstrecken, und mit Lichtmeßelementspalten, die sich senkrecht zu den Lichtmeßzeilen erstrecken, aufweist, und
wobei die Kalibriereinrichtung jeweils Lichtmeßelementen einer Spalte einen einzigen Wellenlängenwert zuordnet,
**dadurch gekennzeichnet,**
**daß** Licht von der Kalibrierlichtquelle in einen Abschnitt eines Monochromatorspalts (11) derart einspeisbar ist, daß Licht von einer zu untersuchenden Probenlichtquelle und Licht von der Kalibrierlichtquelle voneinander getrennt gleichzeitig auf Lichtmeßelemente verschiedener Lichtmeßelementzeilen fällt.

2. Spektrometervorrichtung nach Anspruch 1, **dadurch gekennzeichnet, daß** die Monochromatoreinrichtung (1) als Doppelmonochromator mit einem ersten (7), eine Wellenlängenvorauswahl treffenden und einem zweiten, das vorausgewählte Licht in bezug auf die Wellenlängen noch weiter aufspaltenden Monochromator (8) ausgebildet ist.

3. Spektrometervorrichtung nach Anspruch 2, **dadurch gekennzeichnet, daß** der erste Monochromator ein Prismenmonochromator (7) ist.

4. Spektrometervorrichtung nach Anspruch 2 oder 3, **dadurch gekennzeichnet, daß** der zweite Monochromator ein Echelle-Monochromator (8) ist.

5. Spektrometervorrichtung nach einem der Ansprüche 2 bis 4, **dadurch gekennzeichnet, daß** die Monochromatoreinrichtung (1) zum Durchlaß von Licht unterschiedlicher Wellenlängen bzw. Wellenlängenbereiche einstellbar ist.

6. Spektrometervorrichtung nach Anspruch 5, **dadurch gekennzeichnet, daß** der erste (7) und zweite (8) Monochromator derart ausgebildet sind und die Länge der Lichtmeßeinrichtung (6) in Dispersionsrichtung des empfangenen Lichts derart bemessen ist, daß die Lichtmeßeinrichtung für jeden Einstellwert der Monochromatoreinrichtung (1) aus dem zweiten Monochromator (8) nur Licht gemäß etwa einer einzigen Beugungsordnung empfängt.

7. Spektrometervorrichtung nach einem der Ansprüche 2 bis 6, **dadurch gekennzeichnet, daß** Licht der Kalibrierlichtquelle in einen zwischen dem ersten (7) und zweiten (8) Monochromator vorgesehenen Zwischenspalt (11) einspeisbar ist.

8. Spektrometervorrichtung nach Anspruch 7, **dadurch gekennzeichnet, daß** die Kalibrierlichtquelle Licht mit Wellenlängen derart aussendet, daß bei Einspeisung von Kalibrierlicht der Kalibrierlichtquelle in den Zwischenspalt (11) für jeden Einstellwert der Monochromatoreinrichtung (1) eine zur Kalibrierung auswertbare Belichtung der Lichtmeßeinrichtung durch die Kalibrierlichtquelle erfolgt.

9. Spektrometervorrichtung nach Anspruch 8, **dadurch gekennzeichnet, daß** die Kalibrierlichtquelle eine ein Neongasspektrum emittierende Neon-Glimmlampe umfaßt.

10. Spektrometervorrichtung nach einem der Ansprüche 1 bis 9, **dadurch gekennzeichnet, daß** die Lichtmeßeinrichtung (6) ein CCD-Feld aufweist.

11. Spektrometervorrichtung nach einem der Ansprüche 1 bis 10, **dadurch gekennzeichnet, daß** die Matrixanordnung von Lichtmeßelementen zwei voneinander im Abstand angeordnete Lichtmeßelementfelder (20, 21) aufweist.

12. Spektrometervorrichtung nach einem der Ansprüche 1 bis 11, **dadurch gekennzeichnet, daß** die Lichtmeßeinrichtung längliche, mit ihren Längsseiten senkrecht zur Dispersionsrichtung ausgerichtete Lichtmeßelemente (22) aufweist.

13. Spektrometervorrichtung nach einem der Ansprüche 1 bis 12, **dadurch gekennzeichnet, daß** die Lichtmeßeinrichtung Rechteckpixel (20) in den Abmessungen 50 µm x 12 µm umfaßt.

14. Spektrometervorrichtung nach einem der Ansprüche 1 bis 13, **dadurch gekennzeichnet, daß** die Länge, in der sich die Lichtmeßelementmatrixzeilen in Dispersionsrichtung der Monochromatoreinrichtung (1) erstrecken, etwa 3 mm beträgt.

15. Spektrometervorrichtung nach einem der Ansprüche 1 bis 14, **dadurch gekennzeichnet, daß** die Kalibriereinrichtung eine Lichtmeßwerte der Lichtmeßeinrichtung zur Zuordnung von Wellenlängen und Lichtmeßelementen verarbeitende, programmgesteuerte Datenverarbeitungseinrichtung umfaßt.

16. Spektrometervorrichtung nach Anspruch 15, **dadurch gekennzeichnet, daß** die Datenverarbeitungseinrichtung mit einem Mustererkennungsprogramm zum Erkennen von Spektralabbildungsmustern der Kalibrierlichtquelle für jede Einstellposition der Monochromatoreinrichtung auf eine bestimmte Wellenlänge bzw. bestimmten Wellenlängenbereich versehen ist.

17. Spektrometervorrichtung nach Anspruch 15, **dadurch gekennzeichnet, daß** ein Erkennungsprogramm zum Auswerten der Relativpositionen von Linien von Spektralabbildungsmustern zueinander zur Erkennung von bestimmten Wellenlängen entsprechenden Linien vorgesehen ist.

18. Spektrometervorrichtung nach einem der Ansprüche 15 bis 17, **dadurch gekennzeichnet, daß** in der Datenverarbeitungseinrichtung für wenigstens einen Teil der Lichtmeßelemente individuelle Intensitätsmeßwertkorrekturfaktoren oder individuelle Kalibrierfaktoren gespeichert sind.

19. Spektrometervorrichtung nach einem der Ansprüche 15 bis 18, **dadurch gekennzeichnet, daß** die Datenverarbeitungseinrichtung mit einem Steuerprogramm zur Verstellung der Monochromatoreinrichtung, um bestimmte Spektrallinien eines Spektralabbildungsmusters der Kalibrierlichtquelle genau auf gewünschte Lichtmeßelemente fallen zu lassen, und mit einer Einrichtung zur Justierung einer Einstellskala der Monochromatoreinrichtung versehen ist.

20. Spektrometervorrichtung nach einem der Ansprüche 15 bis 19, **dadurch gekennzeichnet, daß** die Datenverarbeitungseinrichtung mit einem Verarbeitungsprogramm versehen ist, das während der Zuordnung von Wellenlängen zu Lichtmeßelementen die Erfassung von durch eine zu untersuchende Probenlichtquelle erzeugten Lichtmeßwerten steuert.

21. Spektrometervorrichtung nach einem der Ansprüche 15 bis 20, **dadurch gekennzeichnet, daß** das Verarbeitungsprogramm anhand einer Vorabbestimmung von Lichtmeßwerten der Probenlichtquelle die Meßzeit für die eigentliche Spektralmessung der Probenlichtquelle festlegt.

## Claims

1. A spectrometer device comprising
a monochromator means (1),
a light-measuring means (6) receiving spectral light from said monochromator means, and
a calibration means comprising a calibration light source,
wherein the light-measuring means (6) comprises a matrix array (20, 21) of light-measuring elements (22) including light-measuring element lines which extend in the direction of dispersion of the monochromator means and light-measuring element columns which extend at right angles to said lines, and
wherein the calibration means associates a single wavelength value with light-measuring elements of one column.
**characterized in that**
light from the calibration light source is adapted to be fed into a section of a monochromator column (11) in such a way that light from a sample light source to be examined and light from said calibration light source fall simultaneously but separately onto light-measuring elements of different light-measuring element lines.

2. A spectrometer device according to claim 1, **characterized in that**, being a double monochromator, the monochromator means (1) is implemeted such that it comprises a first monochromator (7) carrying out a wavelength preselection and a second monochromator (8) splitting the preselected light still further with regard to the wavelengths.

3. A spectrometer device according to claim 2, **characterized in that** the first monochromator is a prism monochromator (7).

4. A spectrometer device according to claim 2 or 3, **characterized in that** the second monochromator is an echelle monochromator (8).

5. A spectrometer device according to one of the claims 2 to 4, **characterized in that** the monochromator means (1) is adapted to be adjusted so as to permit a passage of light having different wavelengths or different wavelength regions.

6. A spectrometer device according to claim 5, **characterized in that** the first (7) and the second (8) monochromators are of such a nature and that the length of the light-measuring means (6) in the direction of dispersion of the received light is dimensioned such that the light-measuring means receives from the second monochromator (8) only light according to approximately one single order of diffraction for each adjustment value of the monochromator means (1).

7. A spectrometer device according to one of the claims 2 to 6, **characterized in that** the light of the calibration light source is adapted to be fed in an intermediate gap (11) provided between said first (7) and said second (8) monochromator.

8. A spectrometer device according to claim 7, **characterized in that** the calibration light source emits light: with wavelengths of such a nature that, when calibration light of the calibration light source is fed into the intermediate gap (11), an exposure of the light-measuring means, which can be evaluated for calibration, is carried out by the calibration light source for each adjustment value of the monochromator means (1).

9. A spectrometer device according to claim 8, **characterized in that** the calibration light source comprises a neon glow lamp emitting a neon gas spectrum.

10. A spectrometer device according to one of the claims 1 to 9, **characterized in that** the light-measuring means (6) comprises a CCD field.

11. A spectrometer device according to one of the claims 1 to 10, **characterized in that** the matrix array of light-measuring elements comprises two light-measuring element fields (20, 21) which are arranged at a distance from one another.

12. A spectrometer device according to one of the claims 1 to 11, **characterized in that** the light-measuring means comprises elongate light-measuring elements (22) whose longitudinal sides are oriented at right angles to the direction of dispersion.

13. A spectrometer device according to one of the claims 1 to 12, **characterized in that** the light-measuring means comprises rectangular pixels (20) having dimensions of 50 µm x 12 µm.

14. A spectrometer device according to one of the claims 2 to 13, **characterized in that** the length along which the light-measuring element matrix lines extend in the direction of dispersion of the monochromator means (1) is approximately 3 mm.

15. A spectrometer device according to one of the claims 1 to 14, **characterized in that** the calibration means comprises a program-controlled data processing unit which processes light-measurement values of the light-measuring means for associating wavelengths and light-measuring elements.

16. A spectrometer device according to claim 15, **characterized in that** the data processing unit is provided with a pattern recognition program for recognizing spectral image patterns of the calibration light source for each adjustment position of the monochromator means to a specific wavelength or a specific wavelength region.

17. A spectrometer device according to claim 15, **characterized in that** the recognition program for evaluating the positions of lines of spectral image patterns relative to one another is provided for recognizing lines corresponding to specific wavelengths.

18. A spectrometer device according to one of the claims 15 to 17, **characterized in that** individual correction factors for measured intensity values or individual calibration factors are stored in the data processing unit for at least part of the light-measuring elements.

19. A spectrometer device according to one of the claims 15 to 18, **characterized in that** the data processing unit is provided with a control program for adjusting the monochromator means so as to cause specific spectral lines of a spectral image pattern of the calibration light source to fall precisely onto desired light-measuring elements, and with a means for adjusting the setting scale of the monochromator means.

20. A spectrometer device according to one of the claims 15 to 19, **characterized in that** the data processing unit is provided with a processing program controlling during the association of wavelengths with light-measuring elements the detection of light measurement values produced by a sample light source to be examined.

21. A spectrometer device according to one of the claims 15 to 20, **characterized in that**, on the basis of a preliminary determination of light measurement values of the sample light source, the processing program determines the measurement time for the actual spectral measurement of the sample light source.

## Revendications

1. Appareil de spectrométrie comportant
un dispositif monochromateur (1),
un dispositif de mesure de lumière (6) qui reçoit la lumière spectrale du dispositif monochromateur et
un dispositif d'étalonnage qui présente une source lumineuse étalon,
le dispositif de mesure de lumière (6) présentant une matrice (20, 21) d'éléments de mesure de lumière (22) composée de lignes d'éléments de mesure de lumière s'étendant dans la direction de dispersion du dispositif monochromateur et de colonnes d'éléments de mesure de lumière s'étendant dans une direction perpendiculaire aux lignes d'éléments de mesure de lumière, et
le dispositif d'étalonnage affectant une valeur de longueur d'onde unique aux éléments de mesure de lumière d'une même colonne,
**caractérisé par le fait que**
la lumière de la source lumineuse étalon peut être envoyée dans une section d'une fente de monochromateur (11) de telle sorte que la lumière d'une source lumineuse échantillon et la lumière de la source lumineuse étalon tombent séparément sur les éléments de mesure de lumière des différentes lignes d'éléments de mesure.

2. Appareil de spectrométrie selon la revendication 1, **caractérisé par le fait que** le dispositif monochromateur (1) se présente sous la forme d'un double monochromateur avec un premier monochromateur (7) opérant une présélection de longueurs d'onde et un deuxième monochromateur (8) subdivisant encore la lumière présélectionnée en ce qui concerne les longueurs d'onde.

3. Appareil de spectrométrie selon la revendication 2, **caractérisé par le fait que** le premier monochromateur est un monochromateur à prisme (7).

4. Appareil de spectrométrie selon la revendication 2 ou 3, **caractérisé par le fait que** le deuxième monochromateur est un monochromateur à réseau échelle (8).

5. Appareil de spectrométrie selon l'une des revendications 2 à 4, **caractérisé par le fait que** le dispositif monochromateur (1) est réglable pour permettre le passage d'une lumière de différentes longueurs d'onde ou plages de longueurs d'onde.

6. Appareil de spectrométrie selon la revendication 5, **caractérisé par le fait que** le premier (7) et le deuxième monochromateur (8) sont ainsi conçus et la longueur du dispositif de mesure de lumière (6) dans la direction de dispersion de la lumière reçue ainsi calculée que le dispositif de mesure de lumière ne reçoit du deuxième monochromateur (8), pour chaque valeur de réglage du dispositif monochromateur (1), que de la lumière de quasiment un seul ordre de diffraction.

7. Appareil de spectrométrie selon l'une des revendications 2 à 6, **caractérisé par le fait que** la lumière de la source lumineuse étalon peut être envoyée dans une fente intermédiaire (11) prévue entre le premier (7) et le deuxième (8) monochromateur.

8. Appareil de spectrométrie selon la revendication 7, **caractérisé par le fait que** la source lumineuse étalon émet une lumière de longueurs d'onde telles que l'envoi de lumière de la source lumineuse étalon dans la fente intermédiaire (11) produise, pour toute valeur de réglage du dispositif monochromateur (1), une exposition du dispositif de mesure de lumière par la source lumineuse étalon qui soit exploitable pour l'étalonnage.

9. Appareil de spectrométrie selon la revendication 8, **caractérisé par le fait que** la source lumineuse étalon comprend une lampe au néon émettant un spectre de gaz néon.

10. Appareil de spectrométrie selon l'une des revendications 1 à 9, **caractérisé par le fait que** le dispositif de mesure de lumière (6) présente un champ CCD.

11. Appareil de spectrométrie selon l'une des revendications 1 à 10, **caractérisé par le fait que** la matrice d'éléments de mesure de lumière présente deux champs d'éléments de mesure de lumière (20, 21) distants.

12. Appareil de spectrométrie selon l'une des revendications 1 à 11, **caractérisé par le fait que** le dispositif de mesure de lumière présente des éléments de mesure de lumière (22) oblongs, perpendiculaires par leur grand côté à la direction de dispersion.

13. Appareil de spectrométrie selon l'une des revendications 1 à 12, **caractérisé par le fait que** le dispositif de mesure de lumière comporte des pixels rectangulaires de dimensions 50 µm x 12 µm.

14. Appareil de spectrométrie selon l'une des revendications 1 à 13, **caractérisé par le fait que** la longueur sur laquelle les lignes de la matrice d'éléments de mesure de lumière s'étendent dans la direction de dispersion du dispositif monochromateur (1) est d'environ 3 mm.

15. Appareil de spectrométrie selon l'une des revendications 1 à 14, **caractérisé par le fait que** le dispositif d'étalonnage comprend un équipement de traitement de données piloté par programme, traitant les valeurs de mesure de lumière du dispositif de mesure de lumière pour l'affectation de longueurs d'onde aux éléments de mesure de lumière.

16. Appareil de spectrométrie selon la revendication 15, **caractérisé par le fait que** l'équipement de traitement de données est muni d'un programme de reconnaissance d'images pour l'identification d'images spectrales de la source lumineuse étalon pour chaque position de réglage du dispositif monochromateur sur une longueur d'onde ou une plage de longueurs d'onde définie.

17. Appareil de spectrométrie selon la revendication 15, **caractérisé par le fait qu**'un programme de reconnaissance est prévu pour l'évaluation des positions relatives de raies d'images spectrales en vue de l'identification de raies correspondant à des longueurs d'ondes définies.

18. Appareil de spectrométrie selon l'une des revendications 15 à 17, **caractérisé par le fait que** des facteurs de correction de valeur de mesure d'intensité individuels ou des facteurs d'étalonnage individuels pour au moins une partie des éléments de mesure de lumière sont mémorisés dans l'équipement de traitement de données.

19. Appareil de spectrométrie selon l'une des revendications 15 à 18, **caractérisé par le fait que** l'équipement de traitement de données est muni d'un programme de commande pour le réglage du dispositif monochromateur afin de faire tomber des raies définies d'une image spectrale de la source lumineuse étalon exactement sur les éléments de mesure de lumière voulus, ainsi que d'un dispositif d'ajustage du cadran de réglage du dispositif monochromateur.

20. Appareil de spectrométrie selon l'une des revendications 15 à 19, **caractérisé par le fait que** l'équipement de traitement de données est muni d'un programme de traitement qui pilote la saisie de valeurs de mesure de lumière produites par une source lumineuse à analyser pendant l'affectation de longueurs d'onde à des éléments de mesure de lumière.

21. Appareil de spectrométrie selon l'une des revendications 15 à 20, **caractérisé par le fait que** le programme de traitement définit le temps de mesure pour la mesure spectrale effective de la source lumineuse échantillon par une détermination préalable de valeurs de mesure de lumière de la source lumineuse échantillon.
